# EUROPÄISCHE PATENTSCHRIFT

(11) **EP 1 645 533 B1**
(45) Veröffentlichungstag und Bekanntmachung des Hinweises auf die Patenterteilung: **06.08.2008**
(21) Anmeldenummer: 05108524.9
(22) Anmeldetag: 16.09.2005
(51) Int. Cl.: B65H 19/10, C09J 7/02

(54) **Klebeband zur Herstellung einer Verbindung bei einem statischen Rollenwechsel**
Adhesive tape for static manual reel changeover
Ruban adhésif pour relier les rouleaux lors d'un échange

(30) Priorität: 06.10.2004 DE 102004048880
(43) Veröffentlichungstag der Anmeldung: 12.04.2006
(73) Patentinhaber: tesa AG, 20253 Hamburg (DE)
(72) Erfinder: Nagel, Christoph, 22417, Hamburg (DE); Gebbeken, Bernhard Dr., 21075, Hamburg (DE)
(74) Vertreter: Stubbe, Andreas

(56) Entgegenhaltungen:
- EP-A- 1 327 672
- DE-A1- 4 233 521

## Beschreibung

Die Erfindung betrifft ein Klebeband zur Herstellung einer Verbindung zwischen zwei flachen, zu Rollen gewickelten bahnförmigen Materialien bei einem statischen Rollenwechsel, mit einem Träger und einer Selbstklebemasse.

Flache, bahnförmige Materialien, insbesondere Papier, werden zu Rollen aufgewickelt, um beispielsweise einer papierverarbeitenden Maschine oder einer Druck- bzw. Verpackungsmaschine zugeführt zu werden. Bei einem statischen Rollenwechsel werden die Rollen wie beispielsweise ein Papiertambour angehalten, d. h. ihre Rotation gestoppt, das Ende des einen Tambours mit dem Anfang des anderen verklebt und der neue Tambour dann wieder in Rotation versetzt. Der statische, manuell von Produktionsmitarbeitern durchgeführte Rollenwechsel von einer leeren auf eine volle Rolle ist in Papierfabriken oder dergleichen ein gängiges Verfahren, um unter anderem endlose Papierbahnen zu erhalten. In der Papierindustrie wird dieses Verfahren z. B. an Umwicklern, Rollenschneidern und Querschneidern eingesetzt. Ein statischer Rollenwechsel ist ein aufwändiger Vorgang, der üblicherweise von zwei Fachkräften ausgeführt werden muss.

Häufig bleibt die Verbindung zwischen alter und neuer Papierbahn, die auch als Spleißen (engl.: "to splice") bezeichnet wird, in der derart zusammengesetzten Papierbahn erhalten und wird an einen Endkunden ausgeliefert. Zur Herstellung derartiger Verbindungen sind doppelseitige Klebebänder, sogenannte Fixe, oder einseitige Klebebänder bekannt. Als Träger für die Klebebänder werden üblicherweise Papierträger verwendet sowie wasserlösliche Selbstklebemassen, die auf den Träger ein- oder beidseitig beschichtet werden.

Bei der Verwendung eines doppelseitigen Klebebands zur Herstellung einer Verbindung wird das Klebeband im Wesentlichen in Längsrichtung einer vollen Rolle des bahnförmigen Materials auf die äußere Lage des bahnförmigen Materials aufgeklebt. Anschließend wird an der radial nach außen weisenden Seite des Klebebands das Trenn- oder Abdeckpapier von der anderen Selbstklebemasse abgezogen und das Ende der Bahn der leeren Rolle wie beispielsweise die Papierbahn des leeren Tambours auf die Selbstklebemasse aufgeklebt. Eventuell überstehende Papierreste können nachgeschnitten oder abgerissen werden.

Einseitige Klebebänder werden hälftig derart unter das Ende der obersten Lage der einen Rolle verklebt, dass im Wesentlichen noch die Hälfte der Selbstklebemasse, in der Breite des Klebebands gesehen, zur Verklebung mit dem anderen Bahnende zur Verfügung steht. In vorteilhafter Weise sind die einseitigen Klebebänder mit einem mittig geschlitzten Trenn- oder Abdeckpapier versehen, so dass die Verklebungen nacheinander ausgeführt werden können wobei jeweils nur ein Abschnitt des Trennpapiers abgezogen wird. Die Verbindung mit einseitigen Klebebändern wird besonders bei Verklebungen eingesetzt, die länger in einer Papierrolle verbleiben. Aufgrund ihrer geringen Dicke verursachen sie bei der Weiterverarbeitung der Papierbahn keine Druckstellen und die elastische Selbstklebemasse wird durch die Weiterverarbeitung nicht seitlich herausgequetscht.

Die eingesetzten Klebebänder zeichnen sich immer durch besonders scherfeste, meist wasserlösliche Klebemassen aus, da sonst die Gefahr des Versagens bei den hohen Zugspannungen besteht oder die Klebebänder beim Einwickeln zu Rollen und der längeren Lagerung ausquetschen und somit mit den nächsten Papierlagen verkleben, was dann bei der Weiterverarbeitung zu Problemen führen kann, andererseits aber aufgrund ihrer wasserlöslichen Selbstklebemassen und Papierträger beim Wiedereinsatz der Papierabfälle in der Papiermaschine nicht stören.

Weiterhin sind einseitige Klebebänder bekannt, die auf ihrer Rückseite, die der Selbstklebemasse, die auf den Träger beschichtet ist, gegenüber liegt, mit einem spaltbaren System versehen sind. Dabei wird das spaltbare System, das im Wesentlichen ebenfalls ein doppelseitiges Klebeband umfasst, auf die zweitäußere Lage des bahnförmigen Materials auf der Rolle aufgeklebt, um derart die äußere Lage, die hälftig auf die freiliegende Selbstklebemasse des Klebebands aufgeklebt ist, auf der Rolle zu fixieren. Sobald das Ende der alten Bahn auf der anderen Hälfte der Selbstklebemasse des Klebebands festgeklebt ist und das bahnförmige Material beispielsweise in eine papierverarbeitende Maschine eingezogen wird, wird durch die auftretenden Kräfte, die im wesentlichen senkrecht zur Hauptebene des Klebebandes wirken, das spaltbare System, vorzugsweise der Träger dieses doppelseitigen Klebebands, aufgespalten, die äußere Lage von der Rolle abgewickelt und der Maschine zugeführt wobei die Selbstklebemasse auf der zweitäußeren Lage durch das spaltbare System in nicht klebender Weise abgedeckt ist.

Als nachteilig bei einseitigen Klebebändern ist es anzusehen, dass aufgrund der hohen Zugkräfte im bahnförmigen Material es nach der Herstellung der Verbindung zu einem Auseinanderziehen der beiden Bahnenden an der Klebeverbindung in Längsrichtung des bahnförmigen Materials kommen kann. Dadurch liegt an der aufgezogenen Lücke zwischen den beiden Bahnenden die Selbstklebemasse frei und kann beispielsweise beim Aufwickeln auf eine neue Rolle mit der darüber liegenden Bahn in unerwünschter Weise verkleben. Ein weiterer Nachteil kann entstehen, wenn beim Reißen der überstehenden Bahnen nicht kantengerade gerissen wird und sich die Bahnen teilweise überlappen. Durch diese Überlappungen kommt es zu unerwünschten Verdickungen, die in der aufgewickelten Rolle zu Druckstellen oder zu Problemen in der Weiterverarbeitung der Papierrolle, z. B. beim Bedrucken, führen können.

Ausgehend von diesem Stand der Technik ist der Fachmann vor die Aufgabe gestellt, ein Verfahren zur Herstellung einer Verbindung zwischen zwei flachen bahnförmigen Materialien anzubieten, bei dem ein statischer Rollenwechsel in einfacher Weise durchführbar ist, wobei das Auftreten von nicht abgedeckten Bereichen der Selbstklebemasse auch bei hohen Zugbelastungen im bahnförmigen Material vermieden sein soll.

Diese Aufgaben werden durch die im Hauptanspruch angegebenen Merkmale gelöst.

Der Kerngedanke der Erfindung besteht darin, dass in einem Verfahren des statischen Rollenwechsels ein Klebeband eingesetzt wird, bei dem die Selbstklebemasse nicht als durchgängige Schicht im Wesentlichen über die gesamte Oberfläche des Klebebands verteilt angeordnet ist, sondern einen in Längsrichtung des Klebebands verlaufenden Spalt oder eine Lücke aufweist, um derart die Selbstklebemasse in zwei im Wesentlichen symmetrische Abschnitte aufzuteilen. Hierbei ist der Spalt in der Breite des Klebebands gesehen vorzugsweise mittig angeordnet.

Mit diesem Klebeband mit zwei getrennten Abschnitten der Selbstklebemasse ist es möglich, dass bei der manuellen Herstellung einer Verbindung von bahnförmigen Materialien bei einem statischen Rollenwechsel beispielsweise Papierbahnen derart jeweils auf die beiden durch den Spalt beabstandeten Selbstklebemassen aufgeklebt werden, dass sie zur Mitte des Klebebands hin gesehen die Selbstklebemassen jeweils vollständig überdecken sowie zumindest teilweise den Spalt zwischen den Selbstklebemassen. Das bedeutet, dass der Abstand der einander zugewandten Enden der Bahnen geringer ist als die Breite des Spalts. Somit ist sichergestellt, dass beim Auftreten von Zugkräften in der verklebten Bahn, die zu einer geringfügigen Verschiebung der jeweiligen Bahnenden an der Verbindungsstelle führen können, es nicht unmittelbar zum Freiliegen von Bereichen der Selbstklebemasse kommt, da die Enden der jeweiligen Bahnen die Selbstklebemassen überlappend angeordnet sind. Es ist für den Fachmann möglich, die Breite des Spalts bzw. die Haltezeit der Selbstklebemassen derart zu wählen, dass selbst unter den größten auftretenden Zugbelastungen im bahnförmigen Material die Enden jeweils höchstens soweit relativ zu den Selbstklebemassen verschoben werden, dass diese gerade noch vollständig überdeckt sind, um Verklebungen mit weiteren Bahnen oder Lagen des Materials, z. B. beim Aufrollen auf eine neue Rolle, zu vermeiden.

Der Vorteil der Erfindung besteht darin, dass sich mit einem einseitigen Klebeband dünne Verbindungsstellen herstellen lassen, die insbesondere beim Endkunden der miteinander verklebten Bahnen praktisch keine Probleme bei der Weiterverarbeitung verursachen. Weiterhin ist durch die Ausgestaltung mit zwei voneinander beabstandeten Selbstklebemassen gewährleistet, dass es auch bei hohen Zugbelastungen nicht zum Freiliegen von Selbstklebemasse kommt.

Vorteilhafte Ausgestaltungen der Erfindung sind in den Unteransprüchen gekennzeichnet.

Gemäß der Ausgestaltung in Anspruch 2 ist vorgeschlagen, dass auf einer der Selbstklebemassen abgewandten Seite des Trägers, d. h. auf seiner Rückseite, ein spaltbares System angeordnet ist. Es können auch mehrere spaltbare Systeme vorgesehen sein. Mit diesem spaltbaren System kann in an sich bekannter Weise das Klebeband auf der zweitäußeren Lage der auf eine Rolle aufgewickelten Bahn fixiert werden. Hierfür wird eine Abdeckfolie des spaltbaren Systems manuell abgezogen und das Klebeband, das mit einer Hälfte bereits mit dem Ende der Bahn auf der Rolle von unten her verklebt ist, auf die zweitäußere Lage aufgeklebt. Dabei hat das spaltbare System in vorteilhafter Weise einen deutlich geringern Spaltwiderstand als ein Papierträger, der Zugkräfte aufnehmen muss. Im Rahmen der Erfindung können auch mehrere insbesondere auch unterschiedliche spaltbare Systeme auf der Rückseite des Klebebands angeordnet sein. Diese umfassen bevorzugt geleimtes, hochverdichtetes Papier aus einem Verbund aus Papier und Folie oder einen Verbund aus zwei Folien, wobei der Verbund aus definiert punkt- und/oder linienförmig verbundenen Papieren und/oder Folien bestehen kann. Hierfür kommen beispielsweise folgende Papiere, Papierverbundsystem oder Folien in Frage: leicht spaltbare Papiersysteme, Duplex-Papiere, d. h. definiert zusammenlaminierte Papiere, bei denen der Spaltvorgang sehr homogen verläuft und keine Spannungsspitzen auftreten, insbesondere für Tapeten und Filter, oder definiert zusammengeleimte hochverdichtete Papiere mit einem hohen Weiterreißwiderstand. Die Leimung kann beispielsweise mit Stärke, stärkehaltigen Derivaten, Tapetenkleister auf Basis von Methylcellulose oder von Polyvinylalkoholderivaten erfolgen. Beschrieben werden solche Systeme beispielsweise in DE 199 56 442, Abs. 4, Zeile 35 ff. Weiterhin sind spaltbare Systeme bekannt, bei denen die Spaltkräfte über die Größe, Struktur und Summe der Verklebungspunkte bestimmt werden (DE 198 41 609, Abs. 2, Zeile 22). Es ist auch die Verwendung von koextrudierten Folien möglich. Bei mehreren spaltbaren Systemen auf einem Klebeband können diese aus dem gleichen Material bestehen und somit gleiche Spaltkräfte aufweisen, es ist aber auch möglich, die spaltbaren Systeme jeweils aus unterschiedlichen Materialien auszubilden, um ihnen unterschiedliche Spaltkräfte zuzuordnen. Der Weiterreißwiderstand des spaltbaren Systems beträgt vorzugsweise zwischen 5 und 70cN/cm, insbesondere 12 bis 60cN/cm. Zur Messung des Weiterreißwiderstandes wird verwiesen auf die DE 199 02 179 A1.

DE 4 233 521 A1 beschreibt ebenfalls spaltbare System zum Verbinden von Papier-und Kartonbahnen.

In vorteilhafter Weise ist der Träger, in Querrichtung des Klebebands gesehen, breiter als das oder die spaltbaren Systeme wie im Anspruch 3 angegeben. Das bedeutet, dass der Träger im Querschnitt beziehungsweise in der Breite des Klebebands gesehen, die spaltbaren Systeme seitlich überlappt oder überragt. In Transportrichtung der Bahn gesehen kann der Träger das oder die spaltbaren System im Bereich der Vorderkante des Klebebands bis zu 20mm überragen, um das Aufspalten des Systems beim Abwickeln der Bahn von der neuen Rolle sicher zu gewährleisten. Bei besonderen Ausführungsformen kann dieser Überstand auch kleiner sein z. B. zwischen 0,5 bis 15mm, in weiter bevorzugter Weise zwischen 1 bis 7 mm und in besonders bevorzugter Weise zwischen 1,5 bis 3,5mm. Sind mehrere spaltbare Systeme an der Rückseite des Trägers des Klebebands angeordnet, so beträgt der Abstand der spaltbaren Systeme zueinander beispielsweise 3 bis 40mm, insbesondere 25 bis 45mm und in besonderes vorteilhafter Weise 20 bis 30mm.

In einer im Anspruch 4 vorgeschlagenen Ausgestaltung weist die Selbstklebemasse eine Haltezeit von mindestens 1000 Minuten auf Streichrohpapier und mindestens 2000 Minuten auf Tiefdruckpapier auf, gemessen jeweils bei 23°C und 55% relativer Luftfeuchtigkeit und bei 1kg Belastung. Dabei wird die Haltezeit mit dem Fachmann bekannten normierten Messverfahren gemessen. Ein Klebeband mit Selbstklebemassen mit derartigen Haltezeiten stellt sicher, dass die verklebten Enden der Bahnen sich auch unter hohen Zugspannungen nicht vom Klebeband lösen bzw. es nicht zum Freiliegen der Selbstklebemasse kommt.

### Die Messung der Haltezeit erfolgt dabei wie folgt:

Zur Messung der Haltezeit von Klebemassen werden diese auf einen Standardträger (Polyesterfolie; Dicke: 25 µm) beschichtet. Vorteilhafterweise wird ein immer gleicher Masseauftrag von 25 g/m² gewählt.

Nach dem Trocknen und einer eventuellen Vernetzung der Klebemasse wird ein Streifen von 13 mm Breite und mindestens 20 mm Länge herausgeschnitten und auf ein definiertes Papier (z. B. Tiefdruckpapier, z. B. Neopress T 54, 54 g/m², oder Streichrohpapier, z. B. Mediaprint, 135 g/m²) verklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt. Für eine bessere Differenzierung der einzelnen Klebemassen wird der Test entsprechend bei weiteren Prüftemperaturen (z. B. 40° C und 70° C) durchgeführt.

Zum Masseauftrag der Selbstklebemassen ist im Anspruch 5 angegeben, dass die Selbstklebemassen mit 20 bis 60g/qm insbesondere mit 25 bis 50g/qm auf den Träger aufgebracht sind. Somit ist gewährleistet, dass eine ausreichende Menge an Selbstklebemasse zur Herstellung einer dauerhaften Verbindung vorhanden ist ohne dass die Selbstklebemasse das Klebeband zu sehr verdickt.

Als Material für die Selbstklebemassen wird im Anspruch 6 vorgeschlagen, dass die Selbstklebemasse eine Acrylatselbstklebemasse ist. Diese ist beispielsweise aus 40 bis 90Gew.-% Acrylsäure und 60 bis 10Gew.-% Butylacrylat oder 40 bis 90Gew.-% Acrylsäure, 30 bis 5Gew.% Butylacrylat und 30 bis 5Gew.% Ethylhexylacrylat zusammengesetzt. Weiterhin kann sie als Weichmacher ethoxylierte Alkylamine, vorzugsweise C16 bis C18 oder mit 15 bis 25 Ethoxy-Einheiten aufweisen. Dabei liegt das Mischungsverhältnis zwischen Weichmacher und Polymer zwischen 55 bis 75Gew.-% Weichmacher und 25 bis 45Gew.-% Polymer. Die Polymerisation erfolgt radikalisch in polaren Lösungsmitteln mit Ethanol als Regler. Es erfolgt eine Teilvernetzung mit Aluminiumchelat 0,3 bis 1,2 Gew.-% bezogen auf die Gesamtmenge. Die Acrylat-Selbstklebemassen können wasserlöslich oder wasserunlöslich ausgebildet sein. In alternativen Ausgestaltungen können Natur- und Synthese-Kautschukmassen sowie Dispersionen der vorstehend beschriebenen Verbindungen als Selbstklebemassen verwendet werden.

In einfacher Weise werden die Selbstklebemassen, wie im Anspruch 7 gekennzeichnet, im Streifenstrich auf den Träger aufgebracht, wobei das Aufbringen zweier definiert beabstandeter Streifen der Selbstklebemassen auf den Träger dem Fachmann möglich ist.

Als Material für den Träger ist im Anspruch 8 vorgeschlagen, dass dieser aus reißfestem Papier oder reißfester Folie besteht. Dies können unter anderem schwach gekreppte Papiere, maschinenglatte Rohpapiere, einseitig gestrichene glatte Rohpapiere, beidseitig gestrichene, verdichtete, bedruckbare Dekorpapiere, einseitig doppelt gestrichene, holzfreie, hochglänzende Kraftpapiere sein oder sonstige Folien aus hierfür geeigneten Kunststoffen, die über ausreichende mechanische Festigkeiten verfügen.

Zur Vorbereitung des erfindungsgemäßen Verfahrens können die Selbstklebemassen mit einer Abdeckung, beispielsweise einem Abdeckpapier oder einer Trennfolie, versehen sein, um das Klebeband in einfacher Weise handhaben zu können. Dabei weist die Abdeckung eine Perforation bzw. einen Schlitz in Längsrichtung des Klebebands auf, um derart zuerst eine Hälfte der Abdeckung von der ersten Hälfte der Selbstklebemasse abziehen zu können, um das Klebeband z. B. unter die äußere Lage der Bahn auf einer vollen Rollen kleben zu können. Anschließend wird die Abdeckung von der anderen Hälfte der Selbstklebemasse abgezogen und das Klebeband mit dem Bahnende der leeren Rolle verklebt.

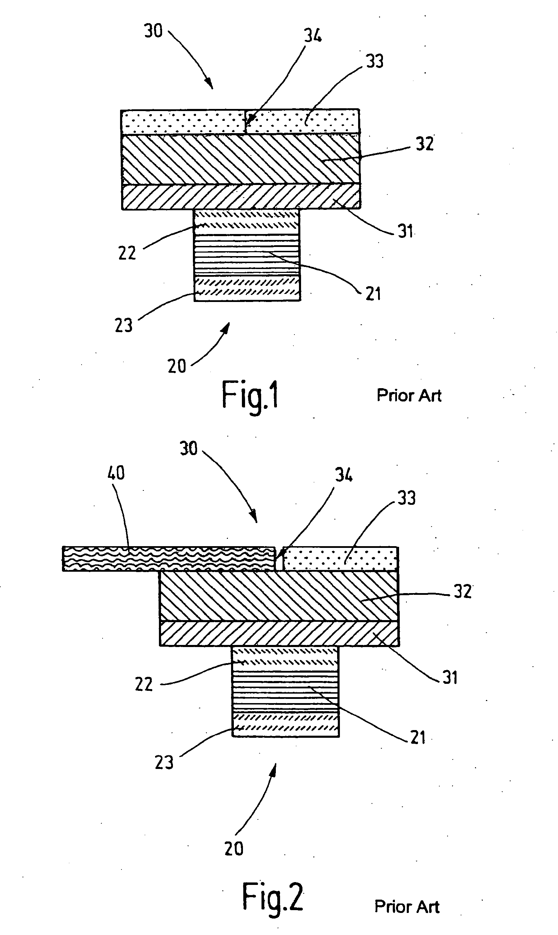

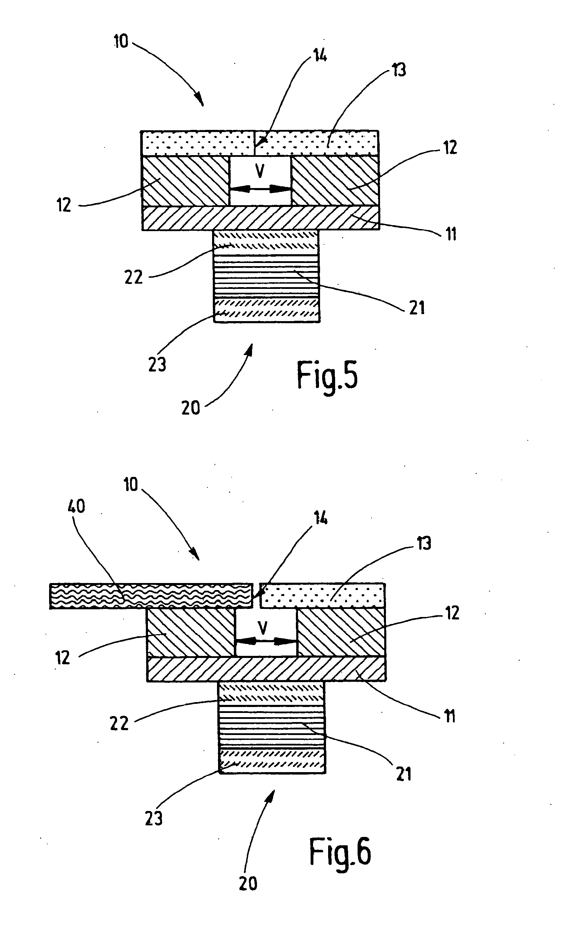

Ein Ausführungsbeispiel aus dem Stand der Technik sowie ein Ausführungsbeispiel eines Klebebandes für die Erfindung werden nachstehend anhand der Zeichnungen näher erläutert, wobei sich die Querschnittsdarstellungen in den Figuren 1 bis 4 auf den Stand der Technik beziehen und die Querschnittsdarstellungen in den Figuren 5 bis 8 auf das Klebeband für die Erfindung. Es zeigen:
- Fig. 1: ein einseitiges Klebeband,
- Fig. 2: ein zur Hälfte mit einer Bahn beklebtes Klebeband,
- Fig. 3: ein mit zwei Bahnen beklebtes Klebeband,
- Fig. 4: ein Klebeband wobei auf die Bahnen eine Zugkraft ausgeübt wird,
- Fig. 5: ein einseitiges Klebeband,
- Fig. 6: ein zur Hälfte mit einer Bahn beklebtes Klebeband,
- Fig. 7: ein mit zwei Bahnen beklebtes Klebeband, und
- Fig. 8: ein Klebeband wobei auf die Bahnen eine Zugkraft ausgeübt wird.

Bei dem in Figur 1 dargestellten Ausführungsbeispiel aus dem Stand der Technik handelt es sich um ein einseitiges Klebeband 30 mit einem Träger 31, beispielsweise ein hochfestes Papier oder eine Kunststofffolie, der auf seiner Oberseite mit einer Selbstklebemasse 32 beschichtet ist. Die Selbstklebemasse 32 ist vorzugsweise wasserlöslich und beispielsweise eine Acrylatselbstklebemasse. Um das Klebeband 30 vor der Herstellung einer Verbindung von zwei bahnförmigen Materialien handhaben zu können ist die Selbstklebemasse 32 mit einer Abdeckung 33, z. B. einem silikonisierten Trennpapier, abgedeckt, um ein Anhaften des Klebebands 30 an unerwünschten Oberflächen zu vermeiden.

An der Unterseite des Klebebands 30 ist ein spaltbares System 20 mit Selbstklebemassen 22, 23 angeordnet. Der Träger 21 des spaltbaren Systems 20 besteht beispielsweise aus einem geleimten, hochverdichteten Papier und spaltet sich unter definierter Krafteinwirkung auf. Das spaltbare System 20 ist über die Selbstklebemasse 22 an der Unterseite des Trägers 31 befestigt. Das spaltbare System 20 ist mit der weiteren Selbstklebemasse 23 beispielsweise auf der Oberfläche der zweitäußeren Bahn eines zu einer Rolle aufgewickelten bahnförmigen Materials aufklebbar. Diese Selbstklebemasse 23 kann mit einer weiteren hier nicht abgebildeten Abdeckung zur Verhinderung des Anhaftens dieser Selbstklebemasse 23 an weiteren Oberflächen versehen sein.

Die Abdeckung 33 ist hier mit einem Schlitz 34 oder einer Perforation ausgeführt, der sich im Wesentlichen über die gesamte Länge des Klebebands 30 erstreckt, um in der Breite des Klebebands 30 gesehen zuerst nur eine Hälfte der Abdeckung 33 abziehen und eine erste Papierbahn 40 auf der Selbstklebemasse 32 befestigen zu können, wie in Figur 2 dargestellt. Diese Bahn 40 ist beispielsweise der Beginn des bahnförmigen Materials auf einer vollen Rolle oder einem Papiertambour. Der Spalt 34 zwischen der Papierbahn 40 und der verbleibenden Hälfte der Abdeckung 33 kann auch geringfügig größer sein als der Schlitz 34 zwischen den beiden Abdeckungen 33. Nachfolgend wird die untere Selbstklebemasse 23 auf die darunter liegende zweitäußere Bahn der aufgewickelten Rolle aufgeklebt.

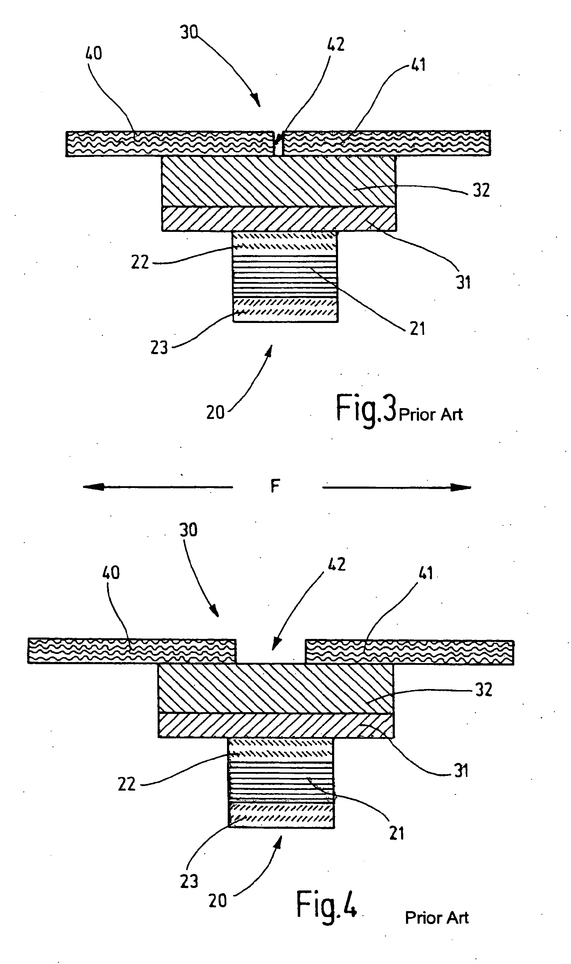

Nachfolgend wird entsprechend Figur 3 die zweite Abdeckung 33 entfernt und das Ende der alten Bahn 41, beispielsweise von einem fast leeren Papiertambour, ebenfalls auf die Selbstklebemasse 32 aufgeklebt, wobei hier ein Lücke 42 zwischen den beiden Papierbahnen 40, 41 entsteht, da es praktisch unmöglich ist, diese beiden Bahnen exakt auf Stoß auf der Selbstklebemasse 32 festzukleben bzw. die Schnittkanten der Bahnen 40, 41 nicht exakt gerade sind.

In Figur 4 ist eine Verbindung zwischen zwei Papierbahnen 40, 41 dargestellt, die einer Zugbelastung F ausgesetzt ist, wie dies beispielsweise bei der Weiterverarbeitung der zusammengeklebten Bahnen 40, 41 oder bereits beim Beschleunigen der neuen Rolle auftritt. Durch die Zugkraft F wird die Lücke 42 zwischen den beiden Stößen der Bahnen 40, 41 vergrößert, sodass hier die Oberfläche der Selbstklebemasse 32 nicht abgedeckt ist und somit die Selbstklebemasse 32 an weiteren nicht gewünschten Oberflächen anhaften kann und es zu Störungen bei der Weiterverarbeitung der endlosen Bahn kommen kann.

In Figur 5 ist das erfindungsgemäße Klebeband 10 dargestellt, das an seiner Unterseite ein im Wesentlichen gleichartiges spaltbares System 20 entsprechend dem Stand der Technik aufweist, das heißt mit einem spaltbaren Träger 21 sowie Selbstklebemassen 22, 23 sowie einer hier nicht dargestellten Abdeckung für die Selbstklebemasse 23. Das Klebeband 10 besteht im Wesentlichen aus einem Träger 11 aus einem hierfür geeigneten Material sowie Selbstklebemassen 12, vorzugsweise auf Acrylatbasis, wobei die Selbstklebemasse 12 wasserlöslich sein kann. Die Selbstklebemasse 12 ist hier derart auf den Träger 11 aufgebracht, vorzugsweise im Streifenstrich, dass zwischen zwei Bereichen der Selbstklebemasse 12 auf dem Träger 11 ein im Wesentlichen konstanter Abstand V gebildet ist, um derart einen Spalt oder eine Lücke zwischen zwei Abschnitten der Selbstklebemasse 12 zu schaffen, wobei die Selbstklebemassen 12 vorzugsweise derart angeordnet sind, dass sie über die Breite des Klebebands 10 gesehen symmetrisch sind. Vor der Herstellung einer Verbindung zweier Bahnen 40, 41 sind die Selbstklebemassen 12 mit einer Abdeckung 13 versehen, die ebenfalls mittig einen Schlitz 14 oder eine Perforation aufweisen kann. Die Dicke des Trägers 11 mit der Selbstklebemasse 12 beträgt ungefähr 0,08mm, die Breite ca. 50mm. Das spaltbare System 20 kann eine Breite von ca. 9 mm aufweisen.

In Figur 6 ist die erste Hälfte der Abdeckung 13 abgezogen und eine erste Bahn 40 mit ihrem Ende auf die Selbstklebemasse 12 aufgeklebt. Dabei ist die Bahn 40 derart auf die Selbstklebemasse 12 aufgeklebt, dass sie zur Mitte des Klebebands 10 hin gesehen die Selbstklebemasse 12 überlappt oder über diese übersteht. Das Klebeband 10 wird dann mit der Selbstklebemasse 23 des spaltbaren Systems 20 auf die zweitäußere Lage der vollen Rolle aufgeklebt, um das Ende der Bahn 40 auf der Rolle zu fixieren.

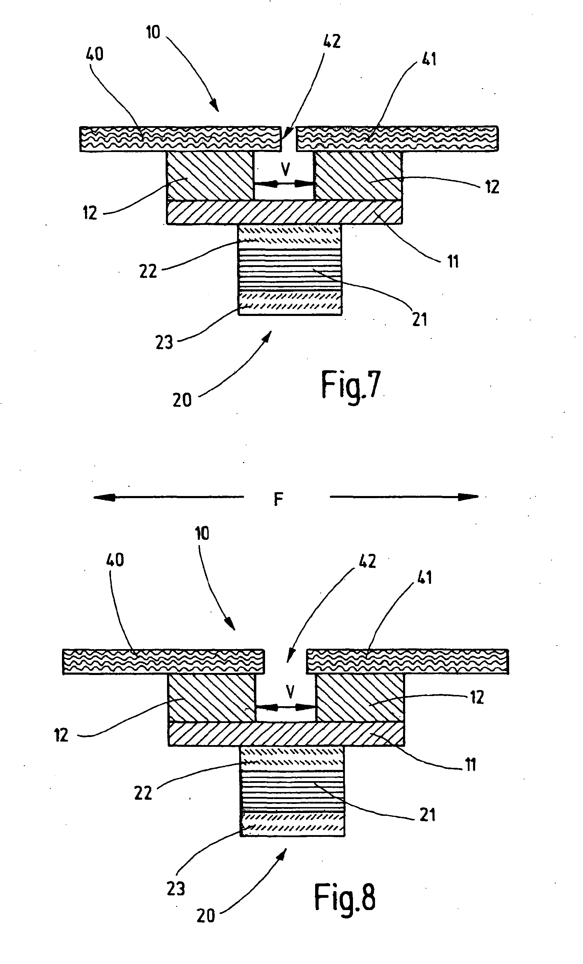

Anschließend wird, wie in Figur 7 dargestellt, die zweite Bahn 41 auf die Selbstklebemasse 12 aufgeklebt, wobei die somit zwischen den Enden der Bahnen 40, 41 gebildete Lücke 42 kleiner ist als der Abstand V zwischen den **Selbstklebemassen 12.**

Wird nun entsprechend Figur 8 z. B. bei der Weiterverarbeitung auf die Bahnen 40, 41 eine Zugkraft F ausgeübt kann dies zwar dazu führen, dass sich die Bahnen 40, 41 relativ zu den Selbstklebemassen 12 in horizontaler Richtung gesehen verschieben, da sie vorher jedoch mit einer geringeren Lücke 42 auf die Selbstklebemassen 12 aufgeklebt wurden wird diese Lücke 42 lediglich geringfügig vergrößert und die Selbstklebemasse 12 selbst weiterhin durch die Bahnen 40, 41 abgedeckt, so dass es nicht zu einer Anhaftung der Selbstklebemasse 12 an weiteren Oberflächen kommen kann und der störungslose Ablauf der Weiterverarbeitung gewährleistet ist. Die entsprechende Dimensionierung der Lücke 42 und des Abstands V in Abhängigkeit der gewählten Selbstklebemasse 12, der Materialien der Bahnen 40, 41 sowie der auftretenden Zugkräfte F ist dem Fachmann möglich.

### BEZUGSZEICHENLISTE

- 10: Klebeband
- 11: Träger
- 12: Selbstklebemasse
- 13: Abdeckung
- 14: Schlitz
- 20: spaltbares System
- 21: Träger
- 22: Selbstklebemasse
- 23: Selbstklebemasse
- 30: Klebeband
- 31: Träger
- 32: Selbstklebemasse
- 33: Abdeckung
- 34: Schlitz
- 40: Bahn
- 41: Bahn
- 42: Lücke
- V: Abstand
- F: Zugkraft

## Patentansprüche

1. Verfahren zur Herstellung einer Verbindung zwischen zwei flachen, zu Rollen gewickelten bahnförmigen Materialien (40, 41) bei einem statischen Rollenwechsel,
wobei ein Klebeband (10) mit einer Trägerschicht (11) und einer Selbstklebemasse (12) verwendet wird, wobei in der Selbstklebemasse (12) ein Spalt in Längsrichtung des Klebebands (10) ausgebildet ist, um zwei Selbstklebemassen (12) mit einem Abstand (V) in der Breite des Klebebands (10) gesehen zu bilden,
**dadurch gekennzeichnet, dass** die Enden der bahnförmigen Materialien (40, 41) derart auf die im Abstand (V) voneinander beabstandeten Selbstklebemassen (12) aufgeklebt werden, dass die Lücke (42) zwischen den Enden der Bahnen (40, 41) kleiner ist als der Abstand (V).

2. Verfahren nach Anspruch 1, **dadurch gekennzeichnet, dass** das Klebeband (10) auf einer der Selbstklebemasse (12) abgewandten Seite des Trägers (11) ein spaltbares System (20) aufweist.

3. Verfahren nach Anspruch 2, **dadurch gekennzeichnet, dass** der Träger (11) breiter ist als das spaltbare System (20).

4. Verfahren nach einem der Ansprüche 1 bis 3, **dadurch gekennzeichnet, dass** die Selbstklebemasse (12) eine Haltezeit von mindestens 1000min auf Streichrohpapier und mindestens 2000min auf Tiefdruckpapier aufweist, gemessen jeweils bei 23°C und 55% relativer Luftfeuchtigkeit und bei 1kg Belastung (F).

5. Verfahren nach einem der Ansprüche 1 bis 4, **dadurch gekennzeichnet, dass** der Masseauftrag der Selbstklebemasse (12) 20 bis 60g/qm, insbesondere 25 bis 50g/qm beträgt.

6. Verfahren nach einem der Ansprüche 1 bis 5, **dadurch gekennzeichnet, dass** die Selbstklebemasse (12) eine Acrylatbasis umfasst.

7. Verfahren nach einem der Ansprüche 1 bis 6, **dadurch gekennzeichnet, dass** die Selbstklebemasse (12) im Streifenstrich auf den Träger (11) aufgebracht ist.

8. Verfahren nach einem der Ansprüche 1 bis 7, **dadurch gekennzeichnet, dass** der Träger (11) ein reißfester Papier- oder Folienträger ist.

## Claims

1. Method for producing a joint during a static reel change between two flat web materials (40, 41) wound up onto reels, an adhesive tape (10) having a carrier layer (11) and a self-adhesive compound (12) being used, a gap being formed, in the self-adhesive compound (12), in the longitudinal direction of the adhesive tape (10), in order to form two self-adhesive compounds (12) having a spacing (V), as viewed in the width of the adhesive tape (10), **characterized in that** the ends of the web materials (40, 41) are stuck to the self-adhesive compounds (12) spaced apart from one another at the spacing (V) such that the break (42) between the ends of the webs (40, 41) is smaller than the spacing (V).

2. Method according to Claim 1, **characterized in that** the adhesive tape (10) has a cleavable system (20) on the side of the carrier (11) facing away from the self-adhesive compound (12).

3. Method according to Claim 2, **characterized in that** the carrier (11) is wider than the cleavable system (20).

4. Method according to one of Claims 1 to 3,
**characterized in that** the self-adhesive compound (12) has a holding time of at least 1000 min. on coating body paper and at least 2000 min. on gravure printing paper, in each case measured at 23°C, and 55% relative atmospheric humidity and under 1 kg loading (F).

5. Method according to one of Claims 1 to 4,
**characterized in that** the application of the self-adhesive compound (12) is 20 to 60 g/m², in particular 25 to 50 g/m².

6. Method according to one of Claims 1 to 5,
**characterized in that** the self-adhesive compound (12) comprises an acrylate base.

7. Method according to one of Claims 1 to 6,
**characterized in that** the self-adhesive compound (12) is applied to the carrier (11) by strip coating.

8. Method according to one of Claims 1 to 7,
**characterized in that** the carrier (11) is a tear-resistant paper or film carrier.

## Revendications

1. Procédé pour créer une connexion entre deux matériaux plats (40, 41) en forme de bande enroulés en rouleaux, dans le cas d'un changement de rouleaux statique, dans lequel on utilise un ruban adhésif (10) avec une couche porteuse (11) et une masse autocollante (12), une fente étant réalisée dans la masse autocollante (12) dans la direction longitudinale du ruban adhésif (10), afin de former deux masses autocollantes (12) espacées d'une distance (V), vue dans la largeur du ruban adhésif (10),
**caractérisé en ce que** les extrémités des matériaux (40, 41) en forme de bande sont collées sur les masses autocollantes (12) espacées l'une de l'autre de la distance (V) de telle sorte que le vide (42) entre les extrémités des bandes (40, 41) soit plus petit que la distance (V).

2. Procédé selon la revendication 1, **caractérisé en ce que** le ruban adhésif (10) présente, sur un côté du support (11) opposé à la masse autocollante (12), un système fissible (20).

3. Procédé selon la revendication 2, **caractérisé en ce que** le support (11) est plus large que le système fissible (20).

4. Procédé selon l'une quelconque des revendications 1 à 3, **caractérisé en ce que** la masse autocollante (12) présente un temps de rétention d'au moins 1000 min sur du papier support de couche et d'au moins 2000 min sur du papier à héliogravure, mesuré à chaque fois à 23°C et à 55 % d'humidité relative et avec une charge de 1 kg (F).

5. Procédé selon l'une quelconque des revendications 1 à 4, **caractérisé en ce que** l'application de masse de la masse autocollante (12) vaut 20 à 60 g/qm, notamment 25 à 50 g/qm.

6. Procédé selon l'une quelconque des revendications 1 à 5, **caractérisé en ce que** la masse autocollante (12) comprend une base acrylique.

7. Procédé selon l'une quelconque des revendications 1 à 6, **caractérisé en ce que** la masse autocollante (12) est appliquée par enduction en bande sur le support (11) .

8. Procédé selon l'une quelconque des revendications 1 à 7, **caractérisé en ce que** le support (11) est un support en papier ou en film résistant à la déchirure.
